# EUROPEAN PATENT SPECIFICATION

(11) **EP 1 785 341 B1**
(45) Date of publication and mention of the grant of the patent: **13.08.2008**
(21) Application number: 06123101.5
(22) Date of filing: 27.10.2006
(51) Int. Cl.: B62J 6/04

(54) **Tail lamp structure**
Hintere Leuchtstruktur
Structure de feu arrière

(30) Priority: 10.11.2005 JP 2005326021
(43) Date of publication of application: 16.05.2007
(73) Proprietor: HONDA MOTOR CO., LTD., Tokyo 107-8556 (JP)
(72) Inventor: Okamoto, Koji c/o Honda R&D Co., Ltd., Saitama 351-0193 (JP); Wakayama, Hirofumi c/o Honda R&D Co., Ltd., Saitama 351-0193 (JP); Ogiya, Kanichiro c/o Honda R&D Co., Ltd., Saitama 351-0193 (JP); Nakajima, Hiroyuki c/o Honda R&D Co., Ltd., Saitama 351-0193 (JP)
(74) Representative: Poulin, Gérard

(56) References cited:
- EP-A2- 1 422 132
- WO-A-03/035457
- WO-A-20/05002955
- FR-A1- 2 687 116
- JP-A- 6 156 341
- JP-A- 2002 193 160

## Description

### TECHNICAL FIELD AND PRIOR ART

The present invention relates to a tail lamp structure, and more specifically to a tail lamp structure that can prevent an increase in the size of a tail lamp unit and enhance the freedom of layout.

In the related art, there is known a tail lamp device using a double-filament bulb in which filaments of different wattages for a tail lamp and for a stop lamp are received within a single electric bulb. Further, the construction of a tail lamp device in which the tail lamp and the stop lamp are made of separate bulbs and respectively received in separate cases (housings) is also known.

Document JP-Y No. S59-1884 discloses the construction of a tail lamp device in which a bulb for a tail/stop lamp made of a double-filament bulb is arranged at substantially the central portion within a single case, a shielding plate is formed on each of the left and right of the bulb, a bulb for a winker (direction indicator lamp) is arranged on the outer side in the vehicle width direction of the shielding plate, and the portions above the respective bulbs are covered by a lens integrally formed of a red lens and an orange lens.

Document JP-Y No. H02-117279 discloses the construction of a tail lamp device in which the case of a stop lamp is arranged above the case of a tail lamp in rear of a seat on which the occupant sits.

However, the technique according to JP-Y No. S59-1884 involves a problem in that since the amount of heat generation by a double-filament bulb is large, the case formed of resin or the like must have a size sufficient to make it insusceptible to the influence of the amount of heat generation, leading to an increase in the size of the tail lamp device.

Further, the technique according to Document JP-Y No. H02-117279 and such as in closest prior art document EP 1 422 132 involves a problem in that due to the vertical two-stage construction in which the stop lamp is arranged above the tail lamp, the number of parts increases and also the freedom of layout is restricted.

It is an object of the present invention to address the above-mentioned problems of the related art and provide a tail lamp structure which can prevent an increase in the size of a tail lamp unit and enhance the freedom of layout.

### SUMMARY OF THE INVENTION

In order to achieve the above-mentioned object, according to the present invention as defined in independent claim 1, there is provided a tail lamp structure for a motorcycle, including a housing, a lens, and a bulb that are integrally formed, wherein: the bulb includes a tail lamp bulb and a stop lamp bulb; the tail lamp bulb and the stop lamp bulb are arranged on the same horizontal plane or substantially the same horizontal plane within the same section; the tail lamp bulb and the stop lamp bulb are arranged at the bottom of a reflector portion formed by the housing; and the reflector portion is covered by the lens. In the housing, a shielding plate is provided at each of left and right side edges of the reflector portion where the tail lamp bulb and the stop lamp bulb are arranged, and a reflector portion where a winker bulb is arranged is formed on an outer side in the vehicle width direction of the shielding plate.

Further, according to another embodiment, the tail lamp bulb is arranged at substantially the center in a vehicle width direction, and the stop lamp bulb is arranged on each of the left and right of the tail lamp bulb.

Further, according to another embodiment, the lens is split between a portion that covers the reflector portion where the tail lamp bulb and the stop lamp bulb are arranged, and a portion that covers the reflector portion where the winker bulb is arranged.

Further, according to another embodiment, the portion of the lens which covers the reflector portion where the tail lamp bulb and the stop lamp bulb are arranged is formed of transparent red or substantially transparent red resin, and the portion of the lens which covers the reflector portion where the winker bulb is arranged is formed of transparent orange or substantially transparent orange resin.

Further, according to another embodiment, a transparent white or substantially transparent white license plate lamp lens is arranged below the tail lamp lens so as to be sandwiched between the housing and the lens, and a plate-like projection is provided below the stop lamp bulb.

According to the invention, since the tail lamp bulb and the stop lamp bulb are provided separately, the amount of heat generation upon illumination can be reduced as compared with double-filament bulbs, and the size of the housing in the height direction can be reduced. Further, since the tail lamp and the stop lamp are received within the same housing, as compared with the case where these lamps are received in separate housings, the number of parts is reduced, and the freedom of layout can be enhanced. Furthermore, the tail lamp bulb and the stop lamp bulb are arranged on the horizontal plane or substantially horizontal plane, the dimension of the housing in the height direction, in particular, can be reduced.

According to the invention, since the stop lamp bulb is arranged on each of the left and right of the tail lamp bulb at the center, the irradiation range of the stop lamp is broadened in the lateral direction while reducing the height of the housing, thereby making it possible to ensure high visibility upon illumination.

According to the invention, it is possible to obtain a tail lamp unit having the tail/stop lamp and the winker lamp integrally formed therein.

According to the invention, even in cases such as when there is a large difference in curvature between the lens in the portion that covers the reflector portion where the tail lamp bulb and the stop lamp bulbs are arranged, and the lens in the portion that covers the reflector portion where the winker bulb is arranged, or when the lateral dimension of the reflector portion is long, the segmented manufacture makes it possible to simplify the manufacturing process. Further, it becomes easy to form the respective lens using materials of different colors. Furthermore, by reducing the height of the housing of the tail lamp and the stop lamp, the height of the winker lens surface can also be reduced, whereby the height of the lens surface of the tail lamp unit is reduced as a whole to impart a sharp impression for enhanced exterior appearance.

According to the invention, it is possible to obtain a tail lamp unit in which the tail/stop lamp that illuminates in red is arranged at substantially the center in the vehicle width direction, and the winker lamp that illuminates in orange is integrally arranged on each of the left and right of the tail/stop lamp.

According to the invention, the irradiation light to the license plate does not change due to the illumination of the stop lamp upon braking and can irradiate the license plate.

### BRIEF DESCRIPTION OF THE DRAWINGS

The present invention will be better understood on reading the following description and on examining the accompanying drawings, in which:
Fig. 1 is a side view of a motorcycle to which a tail lamp structure according to an embodiment of the present invention is applied.
Fig. 2 is a side view of a tail lamp unit according to an embodiment of the present invention.
Fig. 3 is a front view of a tail lamp unit according to an embodiment of the present invention.
Fig. 4 is a front view of a tail lamp unit, illustrating the placement of respective bulbs.
Fig. 5 is a sectional view taken along the line B-B of Fig. 4.
Fig. 6 is a sectional view taken along the line C-C of Fig. 4.
Fig. 7 is a sectional view taken along the line D-D of Fig. 4.

### DETAILED DESCRIPTION OF PARTICULAR EMBODIMENTS

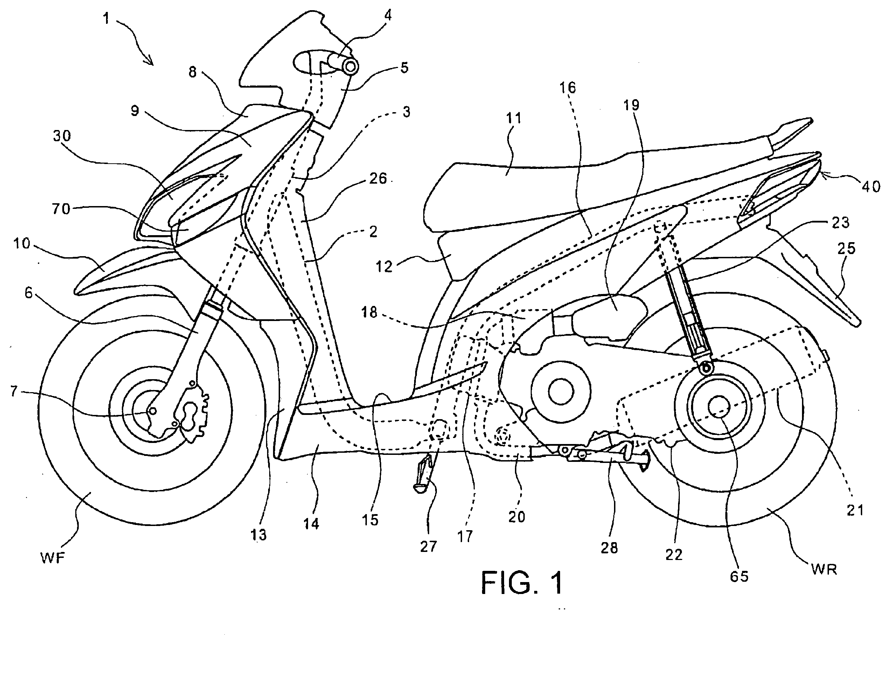

Hereinbelow, preferred embodiments of the present invention will be described in detail with reference to the drawings. Fig. 1 is a side view of an embodiment of a motorcycle to which the present invention is applied. A motorcycle 1 is a scooter type motorcycle equipped with a unit swing type power unit with a built-in continuously variable transmission. A pair of left and right front forks 6 are pivotally mounted on a head pipe 3 fixedly coupled to a main frame 2 as a body frame. A front wheel WF is rotatably pivoted on an axle 7 at the lower end of the front forks 6. The front forks 6 can be steered by means of a handlebar 4 that projects laterally in the vehicle width direction from a handlebar cover 5. A front fender 10 covering the portion above the front wheel WF is steered integrally with the front forks 6. A left-right two-lamp headlight unit 30, and a winker unit 70 consisting of a left-right pair is mounted to a front cover 9 that is a body cover arranged above the front fender 10. A split-type center cover 8 is connected to an upper portion of the front cover 9 so as to form a continuous exterior surface with the front cover 9. Further, a cover panel 26 for covering the main frame 2 is arranged on the vehicle rear side of the front cover 9. At its lower portion, the cover panel 26 is joined to a step floor 15 on which the feet of the occupant are placed. Further, a front lower cover 13 connected to a lower portion of the front cover 9 is joined to an under cover 14 located below the step floor 15.

A side stand 27 is installed at a lower rear portion of the main frame 2. A seat frame 16 for supporting a seat 11, on which the occupant sits, a body cover 12, and the like is also coupled to the lower rear portion of the main frame 2. Further, one end side of a power unit 22 including an engine 17, a carburetor 18, and an air cleaner box 19 is pivotally mounted on the main frame 2 in the rear of the body. The power unit 22 is suspended by means of a rear cushion 23, which is attached to the seat frame 16, so as to be rockable about the one end side. A rear wheel WR as a drive wheel is journalled to the other end side of the power unit 22 so as to be rotatable about an axle 65. Further, an exhaust pipe 20 whose one end is connected to an exhaust port (not shown) provided in the cylinder head of the engine 17 is coupled to a muffler 21 in the rear of the vehicle. Attached to a lower portion of the power unit 22 is a main stand 28 for holding the motorcycle 1 upright when the occupant gets off the vehicle. Further, a tail lamp unit 40 served as a tail lamp structure, in which a tail lamp and a stop lamp, and left and right winker lamps are integrally formed, is arranged at the end of the body cover 12 in the rear of the vehicle. A rear fender 25 that covers the rear wheel WR is mounted below the tail lamp unit 40.

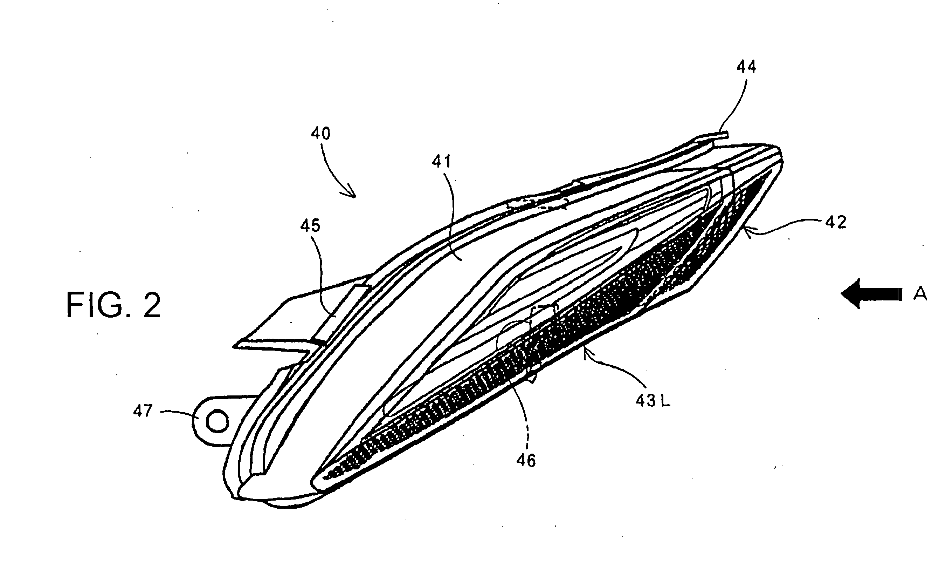

Fig. 2 is a side view of the tail lamp unit 40 as a tail lamp structure according to an embodiment of the present invention. A housing 41 of the tail lamp unit 40 is engaged with the body cover 12 by means of engaging claws 44, 45, and is fastened onto the seat frame 16 or the like at fastening portions 46, 47 with bolts or the like. Further, the housing 41 is formed integrally from resin or the like, with a tail/stop lamp lens 42 and a left tail lamp unit 43L being provided in the surface thereof. The tail lamp unit 40 integrally constituting the left and right winker units is shaped so that the housing 41 as a whole is raised upward toward the rear end thereof, thereby making it possible to impart the rear portion of the motorcycle 1 with a sharp exterior appearance.

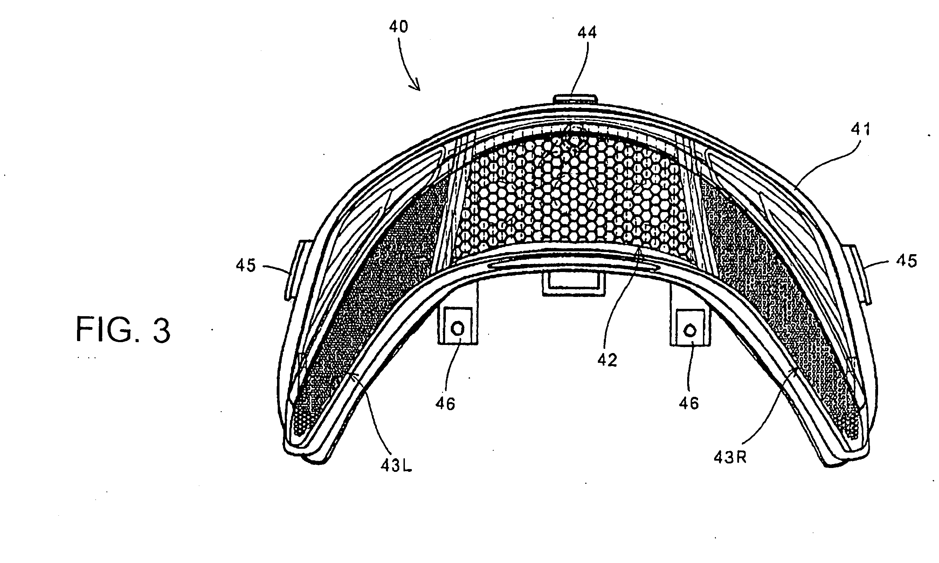

Fig. 3 is a view as seen in the direction A of Fig. 2, and is a front view of the tail lamp unit 40. Reference numerals that are the same as those described above denote portions that are the same as or equivalent to those described above. In the housing 41, the left winker lens 43L and a right winker lens 43R are arranged on the left and right of the tail/stop lamp lens 42 at the central portion of the housing 41. These three lenses form an integral surface and a substantially crescent-shaped continuous contour, thereby imparting the tail lamp unit 40 with a sharp exterior appearance.

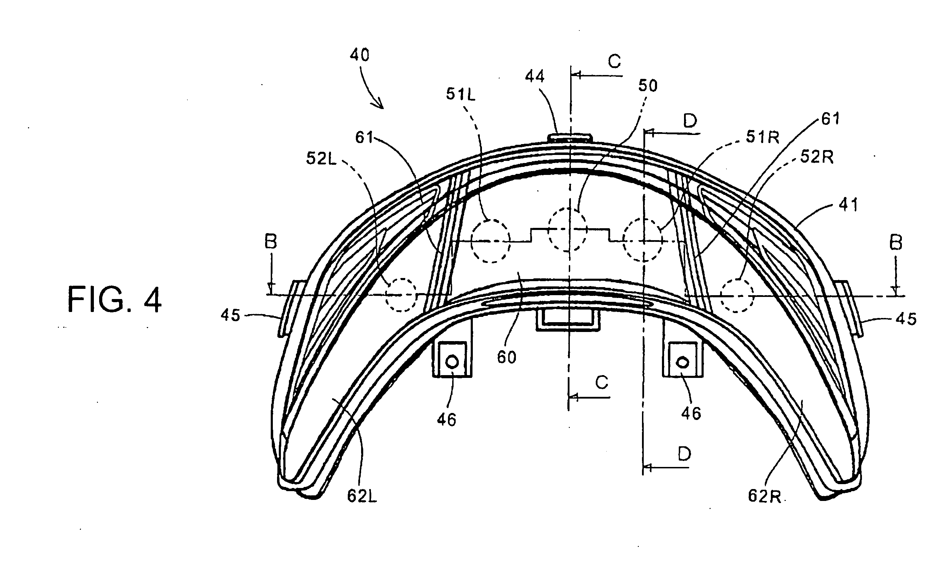

Fig. 4 is a front view of the tail lamp unit 40 with the three lens removed. Reference numerals that are the same as those described above denote portions that are the same as or equivalent to those described above. A central reflector portion 60, left and right shielding plates 61, a left reflector portion 62L, and a right reflector portion 62R are integrally formed in the housing 41. A tail lamp bulb 50 is mounted to the center of the central reflector portion 60, with stop lamp bulbs 51L, 51R being mounted on the left and right of the tail lamp bulb 50. Further, on the left and right of the central reflector portion 60, left and right winker bulbs 52L, 52R that are lit and flashed as direction indicator lamps or hazard lamps are respectively mounted to the left reflector portion 62L and the right reflector portion 62R, which are formed with the shielding plates 61 therebetween.

Since the tail lamp bulb 50 and the stop lamp bulbs 51L, 51R are both single-filament lamps, the amount of heat generation can be suppressed as compared with double-filament lamps. Accordingly, in the case of the horizontal arrangement as described above, in particular, the height dimension of the portion of the housing 41 where the central reflector portion 60 is formed can be reduced, whereby the freedom of design can be enhanced. Further, since the tail lamp bulb 50 and the stop lamp bulbs 51L, 51R are received within the same housing, as compared with the case where separate housings are provided, the freedom of layout can also be enhanced. Further, since the stop lamp bulbs 51L, 51R are arranged on the left and right of the tail lamp bulb 50, the irradiation range upon illumination of the stop lamps becomes broader in the lateral direction, thereby making it possible to enhance the visibility of the stop lamps. It should be understood as a matter of course that while in this embodiment the stop lamp bulbs 51L, 51R are arranged slightly below the tail lamp bulb 50, in accordance with the design of the tail lamp unit 40, the three bulbs may be arranged on the same horizontal plane, or the stop lamp bulbs 51L, 51R may be arranged slightly above the tail lamp bulb 50.

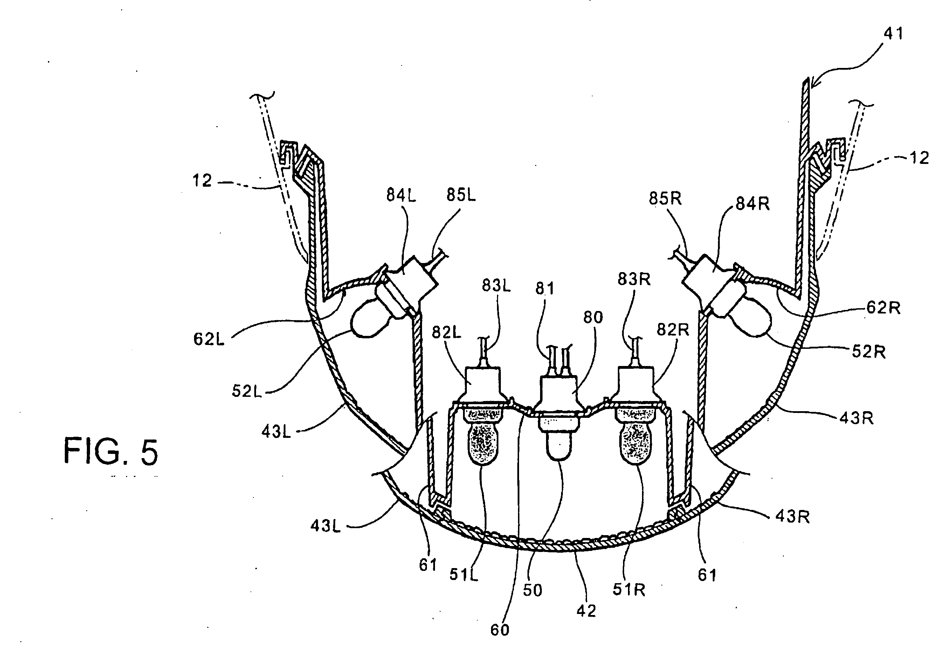

Fig. 5 is a sectional view taken along the line B-B of Fig. 4. Reference numerals that are the same as those described above denote portions that are the same as or equivalent to those described above. In this embodiment, an uneven portion is provided at the bottom of the central reflector portion 60, and the tail lamp bulb 50 with a bulb wattage lower than that of the stop lamp bulbs 51L, 51R is formed so as to slightly project toward the rear side of the vehicle (downward in the drawing). Further, a socket 80 of the tail lamp bulb 50 coupled to a wire cord 81 is fixed to an opening provided in the central reflector portion 60 by means of a screw-fit engagement structure. The same fixing method also applies to sockets 82L, 82R of the stop lamp bulbs 51L, 51R coupled to wire cords 83L, 83R, and to sockets 84L, 84R of the winker bulbs 52L, 52R coupled to wire cords 85L, 85R.

In this embodiment, the tail/stop lamp bulb 42, and the left winker lens 43L and the right winker lens 43R are brought into fitting engagement with each other so as to form a surface whose entire lens surface is smooth, near the rear end of the shielding plates 61 extended toward the rear of the vehicle from the central reflector portion 60. The three lenses are each fitted and fixed onto the housing 41.

Further, in this embodiment, with the respective bulbs being white (clear), the tail/stop lamp lens 42 is formed of transparent red or substantially transparent red resin or the like, and the left winker lens 43L and the right winker lens 43R are formed of transparent orange and substantially transparent orange resin or the like so that the respective lenses are illuminated in red or orange; however, it is also possible to color the surfaces of the bulbs in respective colors and make the respective lenses transparent white or substantially transparent white. Further, the three lenses may be formed integrally, and joining of the lenses to the housing 41 may be effected by fastening with a bolt or the like.

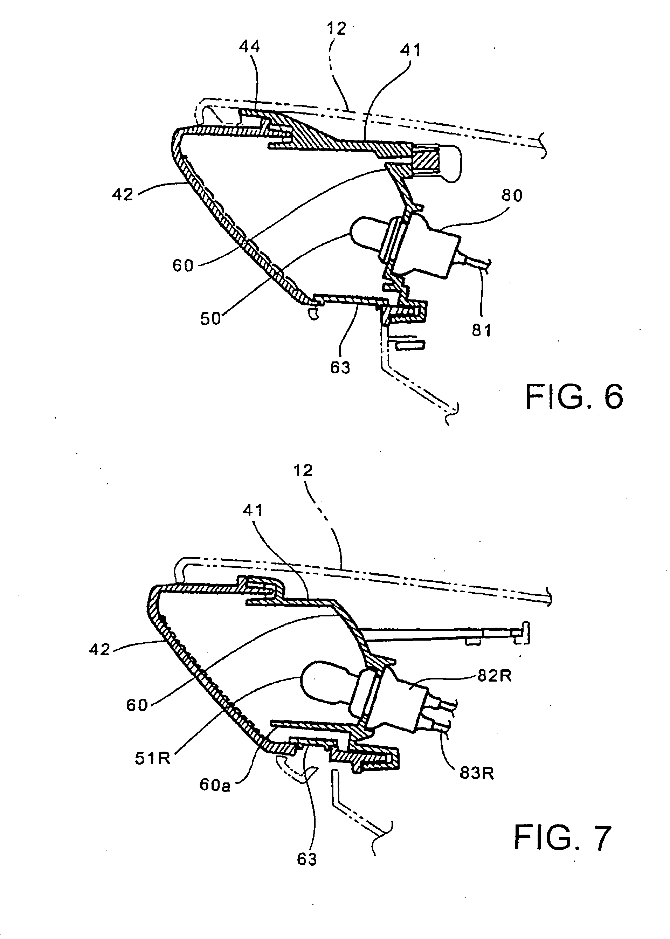

Fig. 6 is a sectional view taken along the line C-C of Fig. 4. Reference numerals that are the same as those described above denote portions that are the same as or equivalent to those described above. A transparent white or substantially transparent white license plate lamp lens 63 is arranged below the tail lamp bulb 50, which illuminates during illumination or the like of the headlight unit 30, so as to be sandwiched between the housing 41 and the tail/stop lamp lens 42. The license plate lamp lens 63 serves to illuminate a license plate (not shown) installed in the rear fender 25 (see Fig. 1) below the tail lamp unit 40 by transmitting white light through a portion below the tail lamp bulb 50. Further, the tail/stop lamp lens 42 is formed so that its lens surface is largely tilted toward the rear side of the vehicle; by forming an elongate and sharp contour at the rear end of the vehicle in combination with the shape of the body cover 12, it is possible to give the motorcycle 1 a tight, well-defined impression.

Fig. 7 is a sectional view taken along the line D-D of Fig. 4. Reference numerals that are the same as those described above denote portions that are the same as or equivalent to those described above. The cross-sectional area of the license plate lamp lens 63 is made small below the stop lamp 51R, and the central reflector portion 60 is provided with a plate-like projection 60a. The above-described construction is to prevent the irradiation light to the license plate from changing due to illumination of the stop lamp upon braking; the same construction applies to the left-hand side in the vehicle width direction where the stop lamp bulb 51L is arranged.

As described above, with the tail lamp structure according to the present invention, the tail lamp and the stop lamps are made of separate single-filament lamps and received within the same housing, thereby making it possible to reduce the height of the lamp member and therefore miniaturization of the tail lamp unit. Further, since the tail lamp and the stop lamps are received within the same housing, the freedom of layout can be enhanced as compared with the case where they are received in separate housings (cases). Furthermore, since one stop lamp bulb is arranged on each of the left and right of the tail lamp bulb at the center, the irradiation range can be broadened in the lateral direction while reducing the height of the lamp member, thereby ensuring high visibility upon illumination of the stop lamps.

It should be understood as a matter of course that the configurations of the housing, reflector portion, lenses, and the like, the sizes, kinds, arrangement, and the like of the respective lamp bulbs are not limited to those of the above-described embodiments but may be modified in various ways, and are applicable to other than a tail lamp unit as well. Further, the lamps are not limited to a tail lamp or a stop lamp, either.

## Claims

1. A tail lamp structure for a motorcycle, comprising a housing (41), a lens (42, 43L, 43R)), and a bulb that are integrally formed,
wherein: the bulb comprises a tail lamp bulb (50) and a stop lamp bulb (51L, 51R) ; **characterized in that**
the tail lamp bulb (50) and the stop lamp bulb (51L, 51R) are arranged on the same horizontal plane or substantially the same horizontal plane within the same section;
the tail lamp bulb (50) and the stop lamp bulb (51L, 51R) are arranged at the bottom of a reflector portion (60) formed by the housing (41); and
the reflector portion (60) is covered by the lens (42);
in said housing (41), a shielding plate (61) is provided at each of left and right side edges of the reflector portion (62L, 62R) where the tail lamp bulb (50) and the stop lamp bulb (51L, 51R) are arranged; and
a reflector portion (62L, 62R) where a winker bulb (52L, 52R) is arranged is formed on an outer side in the vehicle width direction of the shielding plate (61).

2. The tail lamp structure according to Claim 1,
wherein: the tail lamp bulb (50) is arranged at substantially the center in a vehicle width direction; and
the stop lamp bulb (51L, 51R) is arranged on each of the left and right of the tail lamp bulb (50).

3. The tail lamp structure according to Claim 1 or 2, wherein the lens (42, 43L, 43R) is split between a portion (42) that covers the reflector portion (62L, 62R) where the tail lamp bulb (50) and the stop lamp bulb (51L, 51R) are arranged, and a portion (431, 43R) that covers the reflector portion (62L, 62R) where the winker bulb (52L, 52R) is arranged.

4. The tail lamp structure according to any one of claims 1 to 3, wherein the portion (42) of the lens which covers the reflector portion (62L, 62R) where the tail lamp bulb (50) and the stop lamp bulb (51L, 51R) are arranged is formed of transparent red or substantially transparent red resin, and the portion (43L, 43L) of the lens which covers the reflector portion (62L, 62R) where the winker bulb (52L, 52R) is arranged is formed of transparent orange or substantially transparent orange resin.

5. The tail lamp structure according to any one of Claims 1 to 4,
wherein: a transparent white or substantially transparent white license plate lamp lens (63) is arranged below the tail lamp lens so as to be sandwiched between the housing (41) and the lens; and
a plate-like projection is provided below the stop lamp bulb (51L, 51R).

## Patentansprüche

1. Rückleuchtenstruktur für ein Motorrad, umfassend ein Gehäuse (41), eine Linse (42, 43L, 43R), und eine Birne, die integral ausgebildet sind,
wobei: die Birne eine Rückleuchtenbirne (50) und eine Bremsleuchtenbirne (51L, 51 R) umfasst;
**dadurch gekennzeichnet, dass**
die Rückleuchtenbirne (50) und die Bremsleuchtenbirne (51L, 51 R) in der gleichen horizontalen Ebene oder im Wesentlichen der gleichen horizontalen Ebene innerhalb des gleichen Abschnitts angeordnet sind;
die Rückleuchtenbirne (50) und die Bremsleuchtenbirne (51 L, 51 R) am Boden eines Reflektorbereichs (60) angeordnet sind, der durch das Gehäuse (41) gebildet ist; und
der Reflektorbereich (60) durch die Linse (42) bedeckt ist;
wobei in dem Gehäuse (41) eine Abschirmplatte (61) an jeder von linken und rechten Seitenkanten des Reflektorbereichs (62L, 62R) vorgesehen ist, wo die Rückleuchtenbirne (50) und die Bremsleuchtenbirne (51 L, 51 R) angeordnet sind; und
ein Reflektorbereich (62L, 62R), wo eine Blinkerbirne (52L, 52R) angeordnet ist, an einer äußeren Seite in der Fahrzeugbreitenrichtung derAbschirmplatte (61) angeordnet ist.

2. Rückleuchtenstruktur nach Anspruch 1, wobei:
die Rückleuchtenbirne (50) im Wesentlichen im Zentrum in einer Fahrzeugbreitenrichtung angeordnet ist; und
die Bremsleuchtenbirne (51 L, 51R) jeweils links und rechts von der Rückleuchtenbirne (50) angeordnet ist.

3. Rückleuchtenstruktur nach Anspruch 1 oder 2, wobei die Linse (42, 43L, 43R) aufgeteilt ist zwischen einem Bereich (42), der den Reflektorbereich (62L, 62R) bedeckt, wo die Rückleuchtenbirne (50) und die Bremsleuchtenbirne (51 L, 51 R) angeordnet sind, und einem Bereich (43L, 43R), der den Reflektorbereich (62L, 62R) bedeckt, wo die Blinkerbirne (52L, 52R) angeordnet ist.

4. Rückleuchtenstruktur nach einem der Ansprüche 1 - 3, wobei der Bereich (42) der Linse, der den Reflektorbereich (62L, 62R) bedeckt, wo die Rückleuchtenbirne (50) und die Bremsleuchtenbirne (51L, 51 R) angeordnet sind, aus transparentem roten oder im Wesentlichen transparentem roten Harz ausgebildet ist, und wobei der Bereich (43L, 43R) der Linse, der den Reflektorbereich (62L, 62R) bedeckt, wo die Blinkerbirne (52L, 52R) angeordnet ist, aus transparentem orangen oder im Wesentlichen transparentem orangen Harz ausgebildet ist.

5. Rückleuchtenstruktur nach einem der Ansprüche 1 - 4, wobei:
eine transparente weiße oder im Wesentlichen transparente weiße Nummernschild-Leuchtenlinse (63) unter der Rückleuchtenlinse derart angeordnet ist, dass sie zwischen dem Gehäuse (41) und der Linse aufgenommen ist; und
wobei ein plattenförmiger Vorsprung unter der Bremsleuchtenbirne (51 L, 51 R) vorgesehen ist.

## Revendications

1. Structure de feu arrière pour une moto, comprenant un boîtier (41), une lentille (42, 43L, 43R), et une ampoule qui sont formés de manière solidaire,
dans laquelle :
l'ampoule comprend une ampoule de feu arrière (50) et une ampoule de feu de freinage (51L, 51R) ;
**caractérisée en ce que** l'ampoule de feu arrière (50) et l'ampoule de feu de freinage (51L, 51R) sont agencées sur le même plan horizontal ou sensiblement sur le même plan horizontal dans la même section ;
l'ampoule de feu arrière (50) et l'ampoule de feu de freinage (51L, 51R) sont agencées au fond d'une partie formant réflecteur (60) formée par le boîtier (41) ; et
la partie formant réflecteur (60) est recouverte par la lentille (42) ;
dans ledit boîtier (41), on prévoit une plaque de protection (61) au niveau de chacun des bords gauche et droit de la partie formant réflecteur (62L, 62R) où l'ampoule de feu arrière (50) et l'ampoule de feu de freinage (51L, 51R) sont agencées ; et
une partie formant réflecteur (62L, 62R) où l'ampoule de clignotant (52L, 52R) est agencée, est formée sur un côté externe dans le sens de la largeur du véhicule de la plaque de protection (61).

2. Structure de feu arrière selon la revendication 1, dans laquelle :
l'ampoule de feu arrière (50) est agencée sensiblement au centre dans le sens de la largeur du véhicule ; et
l'ampoule de feu de freinage (51L, 51R) est agencée sur chacun des côtés gauche et droit de l'ampoule de feu arrière (50).

3. Structure de feu arrière selon la revendication 1 ou 2, dans laquelle la lentille (42, 43L, 43R) est divisée entre une partie (42) qui recouvre la partie formant réflecteur (62L, 62R) où l'ampoule de feu arrière (50) et l'ampoule de feu de freinage (51L, 51R) sont agencées, et une partie (43L, 43R) qui recouvre la partie formant réflecteur (62L, 62R) où l'ampoule de clignotant (52L, 52R) est agencée.

4. Structure de feu arrière selon l'une quelconque des revendications 1 à 3, dans laquelle la partie (42) de la lentille qui recouvre la partie formant réflecteur (62L, 62R) où l'ampoule de feu arrière (50) et l'ampoule de feu de freinage (51L, 51R) sont agencées, est formée avec une résine rouge transparente ou rouge sensiblement transparente, et la partie (43L, 43R) de la lentille qui recouvre la partie formant réflecteur (62L, 62R) où l'ampoule de clignotant (52L, 52R) est agencée, est formée avec une résine orange transparente ou orange sensiblement transparente.

5. Structure de feu arrière selon l'une quelconque des revendications 1 à 4, dans laquelle :
une lentille feu de plaque d'immatriculation blanche transparente ou sensiblement blanche transparente (63) est agencée au-dessous de la lentille de feu arrière afin d'être prise en sandwich entre le boîtier (41) et la lentille ; et
une saillie en forme de plaque est prévue au-dessous de l'ampoule de feu de freinage (51L, 51R).
